# EUROPEAN PATENT APPLICATION

(11) **EP 2 671 792 A1**
(43) Date of publication of application: **11.12.2013**
(21) Application number: 12741534.7
(22) Date of filing: 03.02.2012
(51) Int. Cl.: B64C 1/00, B64C 1/12, B64C 1/14, B64C 3/24

(54) **COMPOSITE MATERIAL STRUCTURE, AND AIRCRAFT WING AND FUSELAGE PROVIDED THEREWITH**

(30) Priority: 04.02.2011 JP 2011023156
(71) Applicant: MITSUBISHI HEAVY INDUSTRIES, Ltd., TOKYO, Tokyo 108-8215 (JP)
(72) Inventor: TANAKA, Yuya, Tokyo 108-8215 (JP); YOSHIDA, Shinichi, Tokyo 108-8215 (JP); TANAKA, Hideaki, Tokyo 108-8215 (JP); SUZUKI, Hideyuki, Tokyo 108-8215 (JP); ABE, Toshio, Tokyo 108-8215 (JP); KASHIWAGI, Masahiro, Tokyo 108-8215 (JP)
(74) Representative: Henkel, Breuer & Partner
(86) International application number: PCT/JP2012/052517
(87) International publication number: WO 2012/105691

(57) **Abstract**

Provided is a composite material structure that enables weight reduction, with consideration given to stress concentrations in areas around holes. A wing (1), which is the composite material structure, is a composite material made of fiber reinforced plastic extending in one direction and in which access holes (5) are formed. A lower outer plate (3) on the wing (1) is subjected to a tensile load in the longitudinal direction. The longitudinal tensile stiffness of peripheral regions (3a) of the access holes (5) is smaller than the longitudinal tensile stiffness of other regions (3b) surrounding the peripheral regions (3a).

## Description

### {Technical Field}

The present invention relates to a composite material structure having holes, and an aircraft wing and an aircraft fuselage having the composite material structure.

### {Background Art}

In the fields of aircrafts, ships, vehicles, and the like, a composite material made of fiber reinforced plastics (FRP) is widely used as a structure increased in strength and reduced in weight. Holes are sometimes formed in such a composite material for inspection and for access during assembly. When the holes are formed, since stress concentration occurs in the peripheral edge portions of the holes, it is necessary to increase the strength of the peripheral edge portions of the holes.

PTL 1 described below discloses an invention for adding a reinforcing layer to increase thickness and increasing strength in order to reinforce the peripheral edge portions of access holes of an outer plate of an aircraft. The reinforcing layer described in PTL 1 is fixed to a base material by pins or stitches to prevent the reinforcing layer from peeling when the reinforcing layer receives a load.

### {Citation List}

### {Patent Literature}

{PTL 1} Japanese Translation of PCT International Application, Publication No. 2003-513821

### {Summary of Invention}

### {Technical Problem}

However, the invention described in PTL 1 has a problem in terms of productivity because a process for applying the pins or the stitches to the reinforcing layer when the reinforcing layer is added increases.

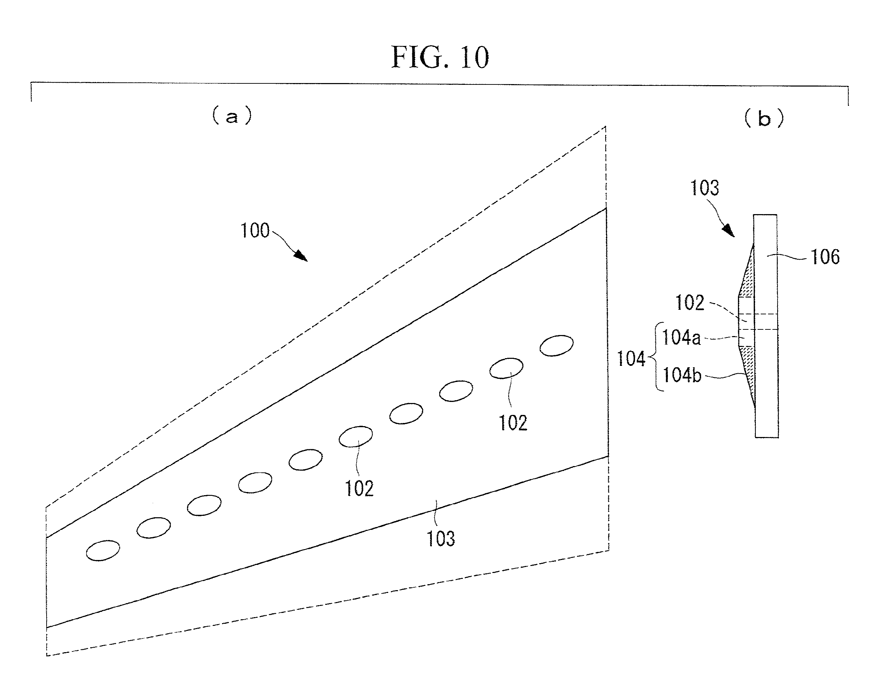

As a method of not using such pins or stitches, a lower surface outer plate 103 of a wing 100 of an aircraft having a structure shown in Fig. 10 is known. As shown in Fig. 10(a), a plurality of access holes 102 are formed in the center section in the width direction of the lower surface outer plate 103. The access holes 102 are used for inspection or during assembly of a fuel tank provided in the wing 100. Broken lines shown in the figure indicate contour lines of the wing 100 including a flap and a slat.{0007}
To increase the strength of the peripheral edge portions of the access holes 102, as shown in Fig. 10(b), a laminate for reinforcement 104 is stacked (padded up) on a base material laminate 106. When viewed in section as shown in Fig. 10(b), the laminate for reinforcement 104 has a shape formed with a taper reduced in thickness further away from the access hole 102. To reinforce the access hole 102, a fixed thickness portion 104a located in the peripheral edge portion of the access hole 102 and having fixed thickness is enough. However, if only the fixed thickness portion 104a is formed, peeling occurs in an interface with the base material laminate 106 when the fixed thickness portion 104a receives a load. To prevent the peeling, the fixed thickness portion 104a is not only formed but also further extended to form a taper portion 104b and gradually increase thickness. Note that, in Fig. 10(b), the taper portion 104b is hatched to facilitate understanding. However, the taper portion 104b and the fixed thickness portion 104a are continuous and formed by the same stacked sheet.
In the structure shown in Fig. 10, the process for applying the pins or the stitches described in PTL 1 is unnecessary. However, from the viewpoint of only reinforcement of the access hole 102, the taper portion 104b is originally unnecessary and is a cause of an increase in weight.

The present invention has been devised in view of such circumstances and it is an object of the present invention to provide a composite material structure reinforced against stress concentration in the peripheral edge portions of holes and enabled to be reduced in weight, and an aircraft wing and an air craft fuselage provided therewith.

### {Solution to Problem}

In order to solve the problems, a composite material structure, and an aircraft wing and an aircraft fuselage provided therewith of the present invention adopt the following solutions.
That is, the composite material structure according to the present invention is of a composite material that extends in one direction, has holes formed therein, and is made of fiber reinforced plastic, and is subjected to a tensile load and/or a compressive load in the one direction. In this composite material structure, the tensile stiffness and/or the compressive stiffness in the one direction of peripheral edge regions around the holes are lower than the tensile stiffness and/or the compressive stiffness in the one direction of other regions surrounding the peripheral edge regions.

Since the tensile stiffness in the one direction in the peripheral edge regions around the holes is lower than the tensile stiffness in the one direction in the other regions surrounding the peripheral edge regions around the holes, the tensile load is applied primarily to the other regions. As a result, the tensile load applied to the peripheral edge regions around the holes becomes relatively lower, and the stress concentration on the peripheral edge regions around the holes is reduced. Accordingly, reinforcement of the peripheral edge regions around the holes can be made smaller than in a case where the peripheral edge regions around the holes have the same tensile stiffness as the other regions.
Also, when the compressive stiffness in the one direction in the peripheral edge regions around the holes is lower than the compressive stiffness in the one direction in the other regions surrounding the peripheral edge regions around the holes, the compressive load is applied primarily to the other regions. As a result, the compressive load applied to the peripheral edge regions around the holes becomes relatively lower, and the stress concentration on the peripheral edge regions around the holes is reduced. Accordingly, reinforcement of the peripheral edge regions around the holes can be made smaller than in a case where the peripheral edge regions around the holes have the same compressive stiffness as the other regions.
Further, when a tensile load and a compressive load are applied to the composite material structure (that is, when a bending load is applied), the tensile stiffness and the compressive stiffness in the one direction in the peripheral edge regions around the holes are made lower than the tensile stiffness and the compressive stiffness in the one direction in the other regions, so that the tensile load and the compressive load are applied primarily to the other regions.

Further, in the composite material structure of the present invention, the peripheral edge regions are of a composite material mainly made of fiber oriented in directions of ±30° to ±60°, and preferably, in the directions of ±45°, when the one direction is the direction of 0°.

Since the peripheral edge regions are made mainly of fiber that is oriented in the directions of ±30° to ±60°, and preferably, in the directions of ±45°, the tensile stiffness in the direction of 0° (the one direction) becomes lower, and regions that allow an extension of the tensile direction (and/or the compressing direction) can be realized. Also, since the peripheral edge regions are provided mainly with the fiber in the directions of ±30° to ±60°, and preferably, in the directions of ±45°, the strength in the shearing direction (a direction perpendicular to the one direction, or the directions of ±90°) increases, and the torsional stiffness can be made higher.
It should be noted that "being made mainly of fiber that is oriented in the directions of ±30° to ±60°, and preferably, in the directions of ±45°" means that the proportion of the fiber oriented in the directions of ±30° to ±60°, and preferably, in the directions of ±45° is higher than that in generally-used composite materials (or the other regions). For example, the proportion of fiber in the directions of ±45° in a conventional composite material used for a wing of an aircraft is approximately 60% ((0°, +45°, -45°, 90°) = (30%, 30%, 30%, 10%), but "being made mainly of fiber that is oriented in the directions of ±30° to ±60°, or more preferably, in the directions of ±45°" means a higher proportion such as 70% or higher, and preferably, 80% or higher.
Also, to further reduce the stiffness in the direction of 0° in the peripheral edge regions, the fiber oriented in the direction of 0° is preferably a material having lower stiffness than the fiber oriented in the directions of ±30° to ±60°, and preferably, in the directions of ±45°. For example, when carbon fiber is used in the directions of ±30° to ±60°, and preferably, in the directions of ±45°, glass fiber or aramid fiber is used in the direction of 0°.

Further, in the composite material structure of the present invention, peripheral edge region fiber sheets to be the peripheral edge regions and other region fiber sheets to be the other regions have divided fiber sheets at predetermined lamination positions, the divided fiber sheets are placed adjacent to the fiber sheets via splice positions in the extending direction of the fiber sheets, and the splice position of one of the divided fiber sheets is placed at a deviated position in the extending direction of the divided fiber sheets from the splice position of another one of the divided fiber sheets.

When the respective divided fiber sheets are placed in a situation where the splice positions are placed at the same positions in the laminating direction, the dividing positions between the peripheral edge region fiber sheets and the other region fiber sheets overlap with one another in the laminating direction, and the material strength at those positions becomes lower. In view of this, the present invention places the splice positions at deviated positions in the extending direction of the fiber sheets, so as to avoid a decrease in material strength at the splice positions. Here, the "splice positions" mean the fiber sheet dividing positions.

Further, in the composite material structure of the present invention, the holes are access holes formed in the lower surface outer plate of a wing of an aircraft.

The lower surface outer plate constitutes the lower surface portion of a torque box that is subjected to a load applied to the wing of the aircraft. Therefore, the lower surface outer plate is subjected to a tensile load in the longitudinal direction of the wing during flight. As the peripheral edge regions around the access holes are the above-described peripheral edge regions, and the regions surrounding the peripheral edge regions are the above-described other regions, the tensile load is applied primarily to the other regions, and only a relatively small tensile load is applied to the peripheral edge regions. Accordingly, reinforcement of the peripheral edge regions around the access holes can be reduced, and a wing that is lighter in weight can be provided.

Further, in the composite material structure of the present invention, the holes are window holes formed in the outer plate of the fuselage of an aircraft.

The fuselage of the aircraft is subjected to a tensile load and a compressive load (or a bending load) in the longitudinal direction. As the peripheral edge regions around the window holes are the above-described peripheral edge regions, and the regions surrounding the peripheral edge regions are the above-described other regions, the tensile load and the compressive load are applied primarily to the other regions, and only a relatively small tensile load and a relatively small compressive load are applied to the peripheral edge regions. Accordingly, reinforcement of the peripheral edge regions around the window holes can be reduced, and an aircraft fuselage that is lighter in weight can be provided.

### {Advantageous Effects of Invention}

In a composite material structure of the present invention, and in an aircraft wing and an aircraft fuselage having the composite material structure, the tensile stiffness and/or the compressive stiffness of the peripheral edge regions are made lower than the tensile stiffness and/or the compressive stiffness of the other regions, so as to reduce the stress concentration on the peripheral edge regions around the holes. Accordingly, the reinforcing structure at the peripheral edge regions around the holes can be simplified, and the weight can be reduced.

### {Brief Description of Drawings}

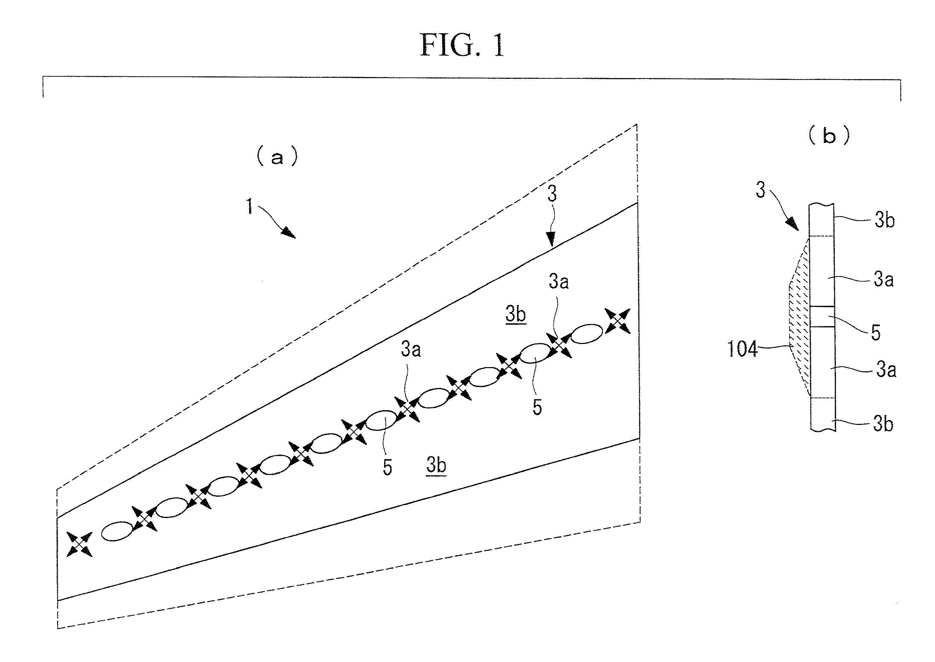

{Fig. 1}
   Fig. 1 shows a lower surface outer plate of a wing of an aircraft according to an embodiment of a composite material structure of the present invention; (a) is a plan view, and (b) is a vertical cross-sectional view.
{Fig. 2}
   Fig. 2 is a perspective view of a lower surface outer plate and stringers that constitute part of a wing having a box structure.
{Fig. 3}
   Fig. 3 is a transverse cross-sectional view, taken along the line A-A defined in Fig. 2.
{Fig. 4}
   Fig. 4 is an exploded perspective view illustrating a method of stacking fiber sheets.
{Fig. 5}
   Fig. 5 is a cross-sectional view illustrating a method of stacking laminate sheets.
{Fig. 6}
   Fig. 6 is a side view of a fuselage of an aircraft, showing another example of an application of the composite material structure of the present invention.
{Fig. 7}
   Fig. 7 is a plan view of a test piece used in Examples of the present invention.
{Fig. 8}
   Fig. 8 is a cross-sectional view, taken along the section line A-A defined in Fig. 7.
{Fig. 9}
   Fig. 9 is a graph showing the results of tensile tests.
{Fig. 10}
   Fig. 10 shows a conventional lower surface outer plate of a wing of an aircraft; (a) is a plan view, and (b) is a vertical cross-sectional view.

### {Description of Embodiments}

Referring to Figs. 1 through 3, an embodiment of the present invention will be described below.
Fig. 1(a) shows a lower surface outer plate 3 of a wing 1 of an aircraft. The lower surface outer plate 3 is formed with a composite material structure made of fiber reinforced plastic (FRP). The dashed lines in the drawing indicate the visible outline of the wing 1 including a flap, a slat, and the like.

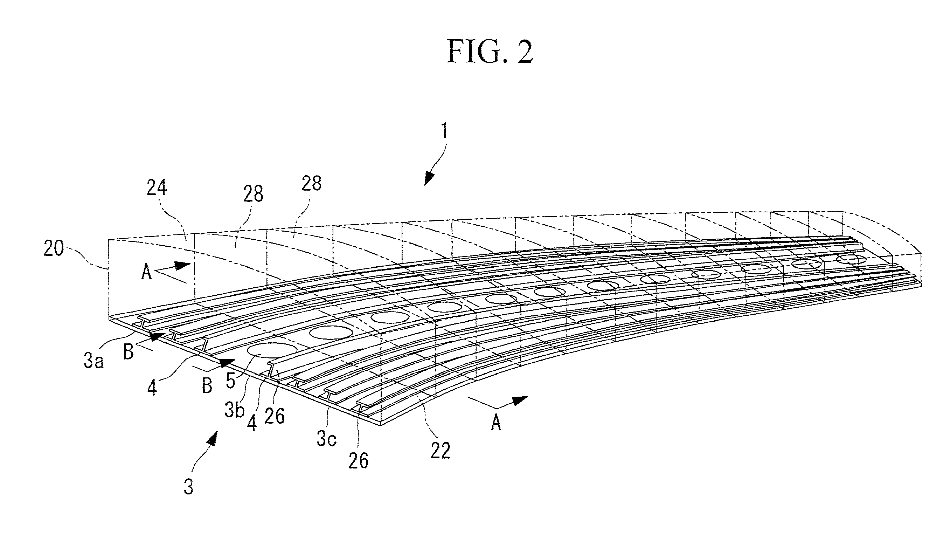

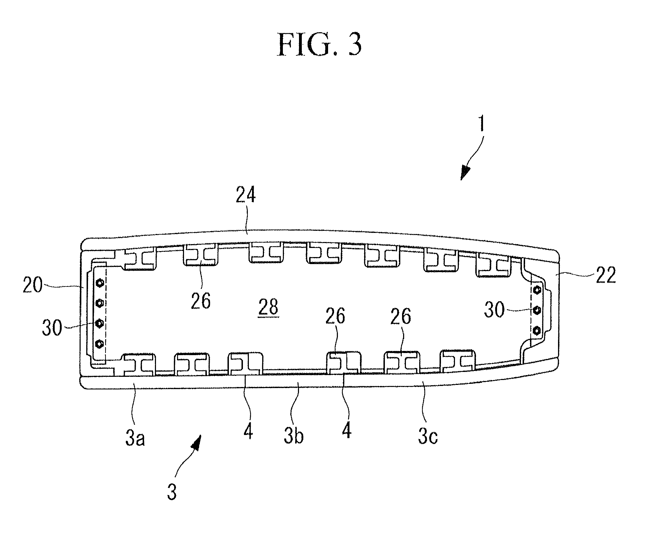

As shown in Figs. 2 and 3, the lower surface outer plate 3 forms a box-shaped torque box with a front spar 20 and a rear spar 22 that form side outer plates standing from both ends of the lower surface outer plate 3 in the width direction, and an upper outer plate 24 connecting the upper ends of the front spar 20 and the rear spar 22 to each other. The lower surface outer plate 3 is subjected to the load of the wing 1.

Stringers 26 are provided in the longitudinal direction of the wing 1. Like the lower surface outer plate 3 and the like, the stringers 26 are of a composite material made of FRP. Each of the stringers 26 is secured to the inner surfaces of the lower surface outer plate 3 and the upper outer plate 24, and is subjected primarily to the longitudinal load of the wing 1.
Ribs 28 are also provided inside the wing 1 having a box structure, so as to divide the internal space into sections in the longitudinal direction. Each of the ribs 28 has a platelike shape extending in the width direction (a direction perpendicular to the longitudinal direction) of the wing 1, and the ribs 28 are placed at predetermined intervals in the longitudinal direction. As shown in Fig. 3, the front and rear ends of the ribs 28 are secured to the front spar 20 and the rear spar 22, respectively, with predetermined fasteners 30 such as nuts and bolts.

As shown in Fig. 1, in the lower surface outer plate 3, access holes (holes) 5 to be used when the fuel tank provided inside the wing 1 is inspected and at the time of assembling or the like are formed at predetermined intervals along with the extending direction of the wing 1.
The lower surface outer plate 3 includes peripheral edge regions 3a located around the respective access holes 5 and the other regions 3b surrounding the peripheral edge regions 3a, and is formed with an integral composite material.
The peripheral edge regions 3a are provided in an entire portion of a predetermined width around the access holes 5. Although each of the peripheral edge regions 3a is indicated by two crossing arrows in Fig. 1(a), this indicates that the peripheral edge regions 3a are made of reinforced composite fiber having a high proportion of fiber oriented in the directions of ±45°, as will be described later.
The other regions 3b are located around the peripheral edge regions 3a, and exist in substantially all the regions outside the peripheral edge regions 3a.

The peripheral edge regions 3a and the other regions 3b constituting the lower surface outer plate 3 are of composite materials made mainly of carbon fiber reinforced plastic (CFRP). The number of composite materials to be stacked is determined by the strength to which the composite materials are to be subjected, and several tens of composite materials are to be stacked, for example.
The proportions of the orientations in the carbon fiber in the other regions 3b are almost the same as those used in an aircraft structure. Where the extending direction (the longitudinal direction) of the wing 1 is 0°, for example, sheets having respective fiber directions are stacked so that the relationship, (0°, +45°, -45°, 90°) = (30%, 30%, 30%, 10%), is satisfied.

The proportions of the orientations in the carbon fiber in the peripheral edge regions 3a differ from those in the other regions 3b, and are mainly ±45° when the extending direction of the wing 1 is 0°. That is, the proportions of the orientations of ±45° are made higher than those in the other regions 3b, and sheets having the respective fiber directions are stacked so that the proportions of the orientations of ±45° become 70% or higher, and preferably, 80% or higher. Further, to reduce the tensile stiffness in the direction of 0°, the fiber in the direction of 0° may be changed from carbon fiber to glass fiber, aramid fiber, or the like.

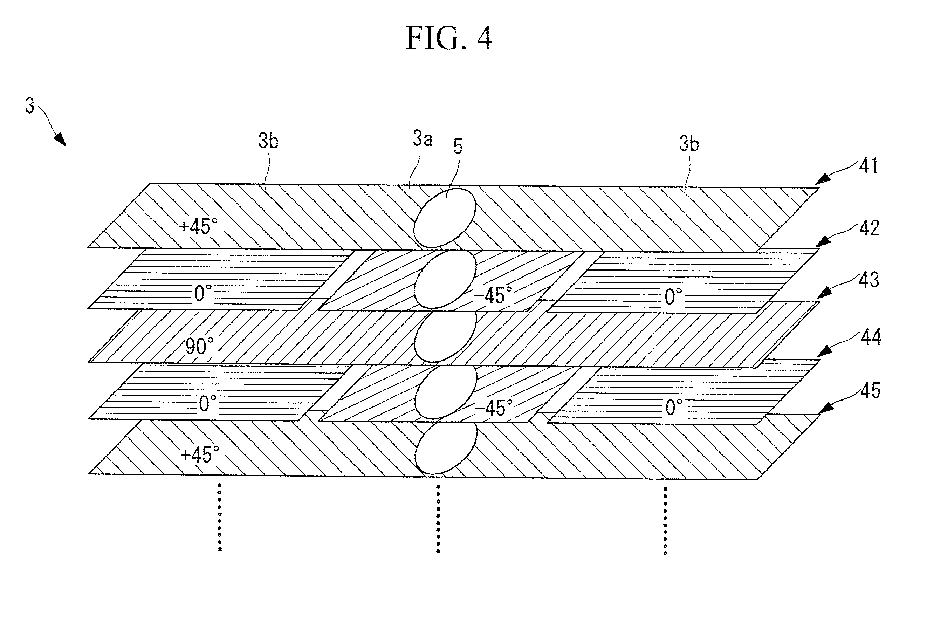

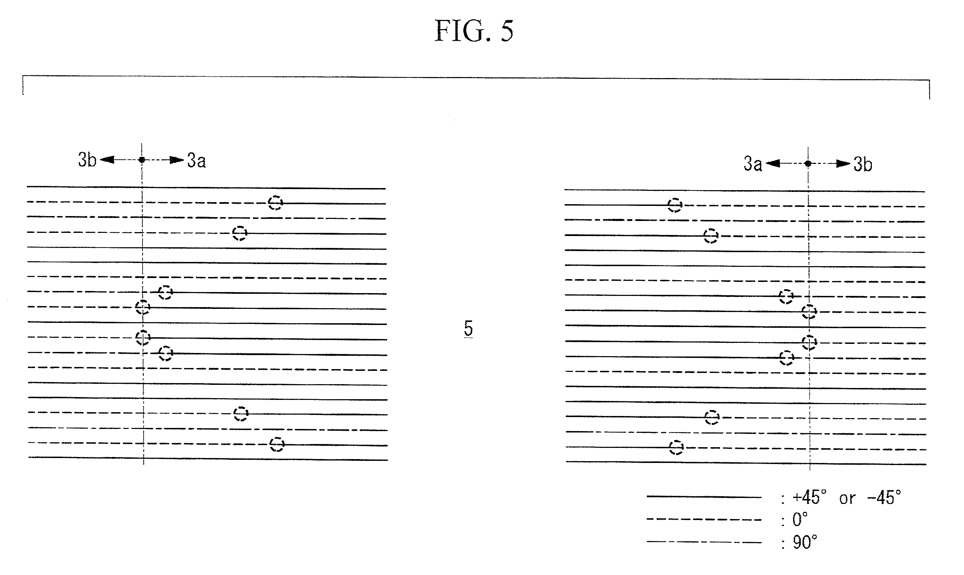

Fig. 4 shows an example of a fiber sheet laminate structure for the lower surface outer plate 3 realizing the above-described proportions.
For example, as shown in Fig. 4, a ±45° fiber sheet extending through the peripheral edge region 3a and the other regions 3b is placed in a first layer 41 located on the uppermost level in the drawing. In a second layer 42 located immediately below the first layer 41, a -45° fiber sheet (a peripheral edge region fiber sheet) is placed in the peripheral edge region 3a, and 0° fiber sheets (other region fiber sheets) are placed in the other regions 3b sandwiching the peripheral edge region 3a. In a third layer 43 located immediately below the second layer 42, a 90° fiber sheet is placed in the peripheral edge region 3a and the other regions 3b. In a fourth layer 44 located immediately below the third layer 43, a -45° fiber sheet is placed in the peripheral edge region 3a, and 0° fiber sheets are placed in the other regions 3b sandwiching the peripheral edge region 3a, as in the second layer 42. In a fifth layer 45 located immediately below the fourth layer 44, a ±45° fiber sheet extending through the peripheral edge region 3a and the other regions 3b is placed, as in the first layer 41.
The above-described first layer 41 through fifth layer 45 are repeatedly formed, or any combinations of those layers are appropriately formed (see Fig. 5). In this manner, the proportions of the orientations of ±45° in the peripheral edge regions 3a can be made higher than those in the other regions 3b.

In Fig. 5, splice positions are indicated by dashed circles. The splice positions are dividing positions between the peripheral edge region fiber sheets and the other region fiber sheets. In this drawing, the splice positions are scattered and placed at deviated positions in the extending direction of the fiber sheets when viewed from the laminating direction. This is because, when the splice positions are placed at the same positions in the laminating direction, the dividing positions between the fiber sheets overlap with one another in the laminating direction, and a decrease in the material strength at those positions needs to be avoided.
The peripheral edge regions 3a are located on the inner sides from the splice positions (on the sides of the access holes 5). Therefore, as shown in the drawing, the inner sides from the splice positions that are the furthest from the access holes 5 are the peripheral edge regions 3a.

Next, the function effects when the wing 1 including the configuration explained above is used are explained.
During flight, a load is applied to the wing 1 to displace the distal end of the wing 1 upward. Therefore, a tensile load in the extending direction of the lower surface outer plate 3 (in the direction of 0°) is applied to the lower surface outer plate 3 of the wing 1. The tensile load in the direction of 0° is applied primarily to the other regions 3b of the lower surface outer plate 3, not to the peripheral edge regions 3a. This is because, compared with the other regions 3b, the peripheral edge regions 3a are made mainly of fiber with the orientations of ±45°, and are regions having lower stiffness with respect to the tensile load in the direction of 0°. Therefore, the peripheral edge regions 3a are subjected to a smaller tensile load than the other regions 3b, and the strength required for the peripheral edge regions 3a is lower. That is, there is no need to provide a reinforcing laminate 104 for achieving a greater thickness as shown in Fig. 10. For easy understanding, the reinforcing laminate 104 of Fig. 10 is also shown in Fig. 1(b). In this manner, the reinforcing laminate 104 becomes unnecessary, and the weight can be reduced accordingly.

Also, since the peripheral edge regions 3a are mainly oriented at ±45°, the shearing stiffness or torsional stiffness is increased. Therefore, the peripheral edge regions 3a are not subjected to the axial force (the tensile load), but is subjected to the torsional load. Of the loads applied to the wing 1, the torsional load is as small as approximately 30% of the tensile load, for example. Accordingly, the peripheral edge regions 3a do not need to be made thicker, and can have the same thickness as the other regions 3b.

Further, since the peripheral edge regions 3a and the other regions 3b are formed with an integral composite material, the peeling described with reference to Fig. 10 does not occur.

Although this embodiment is applied to the lower surface outer plate 3 of the wing 1 in the above description, the present invention is not limited to that, and can be applied to a wide variety of composite material structures having holes.
For example, the upper outer plate constituting the torque box with the lower surface outer plate 3 may have the same constitution as the lower surface outer plate 3. In this case, a compressive load is applied to the upper outer plate. However, the compressive stiffness of the peripheral edge regions 3a is made lower than that of the other regions 3b, so that the stress concentration on the peripheral edge regions 3a can be reduced.

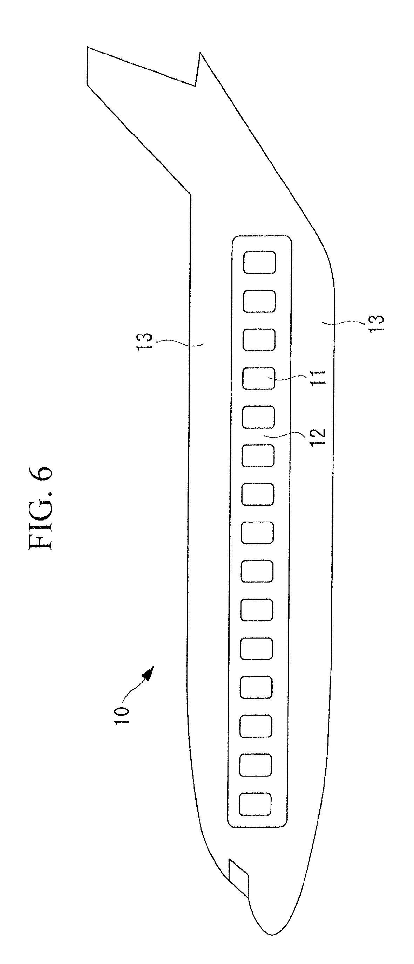

Also, as shown in Fig. 6, the above-described embodiment can be applied to an aircraft fuselage 10 having window holes 11 formed therein. In this case, the same material as that of the peripheral edge regions 3a of the above-described embodiment is used for peripheral edge regions 12 around the window holes 11, and the same material as that of the other regions 3b of the above-described embodiment is used for the other regions 13. A bending load (or a tensile load and a compressive load) is applied to the fuselage 10, but the tensile strength and the compressive stiffness of the peripheral edge regions 12 is made lower than those of the other regions. In this manner, the stress concentration on the peripheral edge regions around the window holes 11 can be reduced.

Further, the composite material structure of the present invention can be applied not only to aircrafts but also to ships and vehicles, for example.
In the above-described embodiment, carbon fiber reinforced plastic (CFRP) is mainly used. However, the present invention is not limited to that, and glass fiber reinforced plastic (GFRP) or aramid fiber reinforced plastic (AFRP) may be used, for example.

### (Examples)

To confirm the effects of the present invention, test pieces were prepared as composite material structures by using CFRP, and tensile tests were conducted.

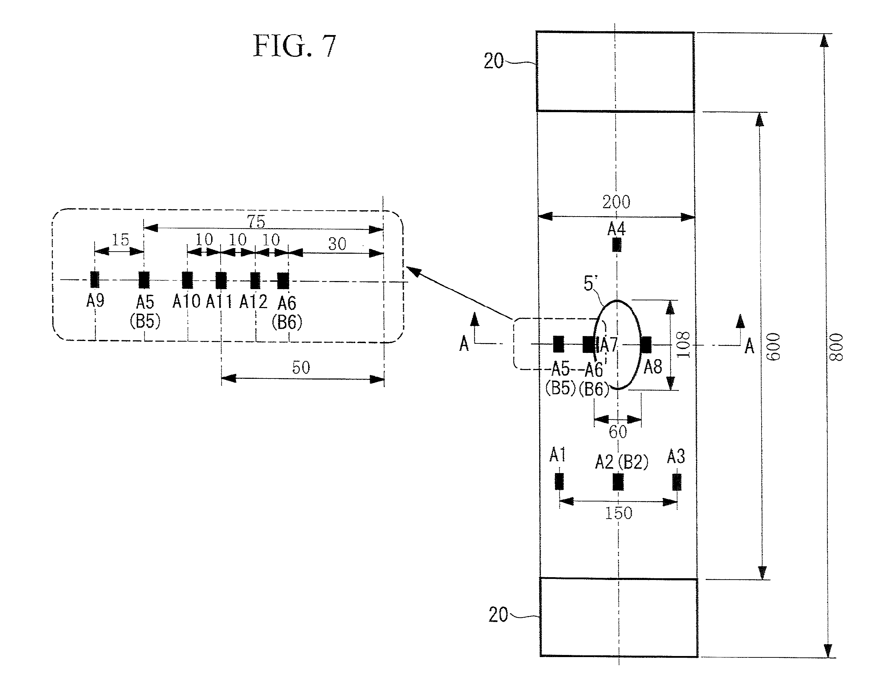

Fig. 7 is a plan view of a test piece. This test piece is 800 mm in length in the longitudinal direction, and 200 mm in width. The thickness is 6.1 mm, and 32 fiber sheets are stacked.
A hole portion 5' equivalent to an access hole (a hole) of the present invention is formed at the center of the test piece. The hole portion 5' has an elliptical shape with a long axis extending in the longitudinal direction. The short axis (the transverse axis) is 60 mm, and the long axis (the longitudinal axis) is 108 mm. Both end portions of the test piece are grip portions 20 to be gripped by a tester. The grip portions 20 are gripped by the tensile tester, and displacement control is performed to apply a load to the test piece in the longitudinal direction. In this manner, a breaking test is conducted. The load speed generated by the tensile tester was 1 mm/min.

Strain gauges were provided at respective positions in the test piece. Fifteen strain gauges A1 through A12, B2, B5, and B6 were used. The strain gauges A1 through A12 were provided on the surface side in Fig. 7, and the strain gauges B2, B5, and B6 were provided on the other surface side in Fig. 7. The strain gauges A6, B6, and A8 were provided to measure positions at a distance of 1.5 mm from the rim of the hole portion 5'.
With the strain gauges being provided at the respective positions, the average value of the strain gauges A1 through A3 was used as the gross strain at the time of breaking (strain at a position not subjected to stress concentration), and the average value of the strain gauges A6, A8, and B6 was used as the peak strain at the time of breaking.

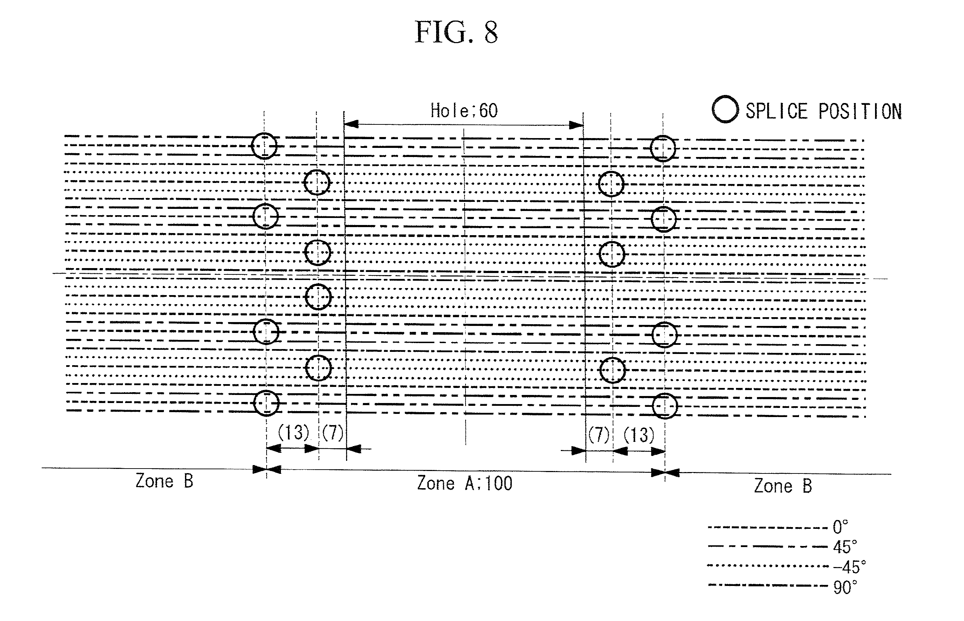

Fig. 8 is a cross-sectional view of the test piece, taken along the line A-A defined in Fig. 7. Zone A is equivalent to a peripheral edge region of the present invention, and Zones B are equivalent to other regions of the present invention. The dashed circles shown in the drawing indicate splice positions, as in Fig. 5. As can be seen from this drawing, the splice positions are provided at a distance of 7 mm and at a distance of 20 mm from the rim of a hole portion (Hole) having a short axis width of 60 mm.
The laminate structure of the test piece is shown in the table below.

**{Table 1}**

| Material used | Laminate | | | Proportion (%) in laminate | | |
|---|---|---|---|---|---|---|
| | ply | Condition | Constitution | 0° | 45° | 90° |
| CFRP | 32 | 1 | Zone A:[(45/45/45/0/-45/-45/-45/90)₂]ₛ | 12.5 | 75 | 12.5 |
| | | | Zone B:[{45/0/45/0/-45/0/-45/90)₂]ₛ | 37.5 | 50 | 12.5 |
| | | 2 | [(45/0/45/0/-45/0/-45/90)₂]ₛ | 37.5 | 50 | 12.5 |

In Table 1, Condition 1 is a test piece having a peripheral edge region (Zone A) of the present invention, and Condition 2 is a comparative test piece that does not have a peripheral edge region (Zone A) but has only Zones B. The proportion of the 45° lamination in Zone A is 75%, which is higher than the proportion of the 45° lamination in Zones B, which is 50%.

The table below shows the results of rupture tests using the above-described test pieces.

**{Table 2}**

| | | | | | Breaking load | | | | | Strain at the time of breaking | | | | | |
|---|---|---|---|---|---|---|---|---|---|---|---|---|---|---|---|
| | | | | | | | | | | Gross strain | | | | | |
| Material | SN | Condition | t | w | Pmax | Average | | Condition 1/ Condition 2 | | En | | Average | | Condition 1/ Condition 2 | |
| | | | mm | mm | kN | kN | | | | mcs | | mcs | | | |
| CFRP | Condition 1-1 | 1 | 6.05 | 200.5 | 487.2 | 491 | | 0.96 | | 7558 | | 7575 | | 1.19 | |
| | Condition 1-2 | 1 | 6.10 | 200.2 | 455.2 | | | | | 7591 | | | | | |
| | Condition 2-1 | 2 | 6.12 | 200.1 | 495.6 | 513 | | | | 6167 | | 6388 | | | |
| | Condition 2-2 | 2 | 6.13 | 200.1 | 529.4 | | | | | 6609 | | | | | |
| | | | | | | | | | | | | | | | |

| | | | | | Strain at the time of breaking | | | | | | Stress concentration Epeak/En | | | | |
|---|---|---|---|---|---|---|---|---|---|---|---|---|---|---|---|
| | | | | | Peak strain at the rims of the holes | | | | | | | | | | |
| Material 1 | SN | Condition | t | w | Epeak | | Average | | Condition 1/ Condition 2 | | Kt | | Average | | Condition 1/ Condition 2 |
| | | | mm | mm | mcs | | mcs | | | | | | kN | | |
| CFRP | Condition 1-1 | 1 | 6.05 | 200.5 | 15082 | | 15118 | | 1.01 | | 2.00 | | 2.00 | | 0.85 |
| | Condition 1-2 | 1 | 6.10 | 200.2 | 15155 | | | | | | 2.00 | | | | |
| | Condition 2-1 | 2 | 6.12 | 200.1 | 14604 | | 14910 | | | | 2.37 | | 2.34 | | |
| | Condition 2-2 | 2 | 6.13 | 200.1 | 15215 | | | | | | 2.30 | | | | |

In Table 2, Condition 1-1 means a first test piece under Condition 1. Therefore, the rupture tests were conducted by using two test pieces under each of Conditions 1 and 2. The plate thicknesses t and the plate widths w in Table 2 are the values measured near the hole portion 5'. Also, mcs means "micro mm/mm."
As can be seen from Table 2, the gross strain is increased approximately 20% under Condition 1 (the present invention) using a laminate structure having Zone A, compared with Condition 2 (Comparative Example). This is supposedly because the peak strain at the rim of the hole remains almost the same with respect to the decrease in stress concentration by the present invention using Zone A, regardless of a change in the laminate structure.

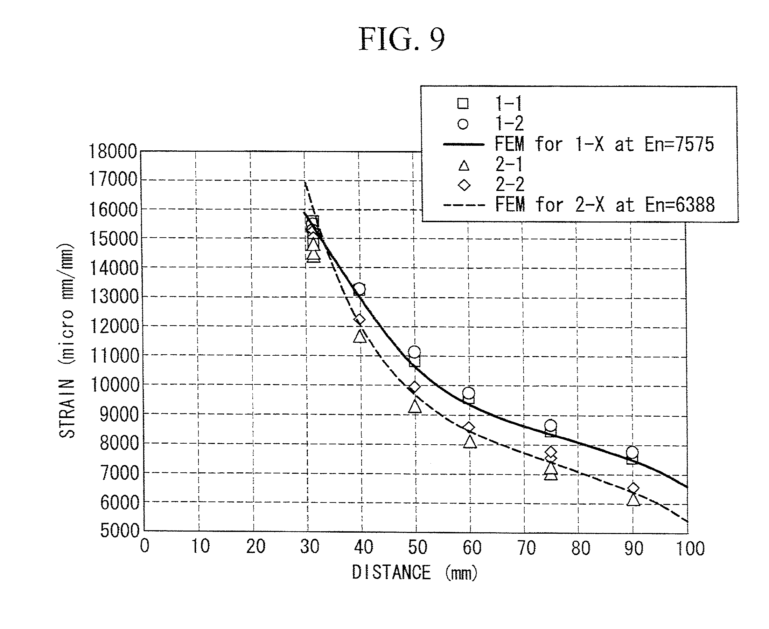

Fig. 9 shows a graph in which the strains at the time of breaking are plotted with respect to the distances from the center of the hole portion 5'. The curves in the graph show the results of analysis conducted by FEM (Finite Element Method).
As can be seen from the graph, Condition 1 of the present invention has a smaller increase in strain near (approximately 30 mm from) the rim of the hole than Condition 2 as a Comparative Example, and has a smaller stress concentration than Condition 2.

### {Reference Signs List}

- 1: Wing
- 3: Lower surface outer plate (Composite material structure)
- 3a: Peripheral edge region
- 3b: Other region
- 5: Access hole (Hole)

## Claims

1. A composite material structure that is of a composite material that extends in one direction, has a hole formed therein, and is made of fiber reinforced plastic, and is subjected to a tensile load and/or a compressive load in the one direction, wherein
tensile stiffness and/or compressive stiffness in the one direction in a peripheral edge region around the hole are lower than tensile stiffness and/or compressive stiffness in the one direction in another region surrounding the peripheral edge region.

2. The composite material structure according to claim 1, wherein, when the one direction is the direction of 0°, the peripheral edge region is of a composite material mainly made of fiber oriented in directions of ±30° to ±60°, and preferably, in the direction of ±45°.

3. The composite material structure according to claim 1 or 2, wherein
a peripheral edge region fiber sheet to be the peripheral edge region and another region fiber sheet to be the other region have divided fiber sheets at predetermined lamination positions, the divided fiber sheets being placed adjacent to the fiber sheets via splice positions in an extending direction of the fiber sheets, and
the splice position of one of the divided fiber sheets is placed at a deviated position in an extending direction of the divided fiber sheets from the splice position of another one of the divided fiber sheets.

4. The composite material structure according to any one of claims 1 to 3, wherein the hole is an access hole formed in a lower surface outer plate of a wing of an aircraft.

5. The composite material structure according to any one of claims 1 to 3, wherein the hole is a window hole formed in an outer plate of a fuselage of an aircraft.

6. An aircraft wing comprising the composite material structure according to claim 4.

7. An aircraft fuselage comprising the composite material structure according to claim 5.
